# EUROPEAN PATENT SPECIFICATION

(11) **EP 3 014 998 B1**
(45) Date of publication and mention of the grant of the patent: **14.06.2017**
(21) Application number: 15191668.1
(22) Date of filing: 27.10.2015
(51) Int. Cl.: A22C 29/02, B65G 47/14

(54) **PROCESSING LINE FOR PEELING SHRIMPS**
VERARBEITUNGSLINIE ZUM SCHÄLEN VON GARNELEN
LIGNE DE TRAITEMENT PERMETTANT DE DÉCORTIQUER DES CREVETTES

(30) Priority: 03.11.2014 NL 2013732
(43) Date of publication of application: 04.05.2016
(73) Proprietor: Heiploeg International BV, 9974 SL Zoutkamp (NL)
(72) Inventor: KLEIN WOOLTHUIS, Cars Merten, 9974 SL Zoutkamp (NL)
(74) Representative: Van Breda, Jacobus

(56) References cited:
- EP-A1- 2 471 373
- WO-A2-01/38202
- GB-A- 2 165 438
- JP-A- S60 209 424

## Description

The invention relates to a processing line for peeling shrimps sequentially comprising a feeder, a conveyor line, a detector for detecting the positional orientation of the shrimps on the conveyor line, and an apparatus to remove and/or reposition the shrimps on the conveyor line which may be actuated depending on the result of the detected positional orientation of the shrimps, and a peeling apparatus for peeling the shrimps.

Such a processing line is known from the applicant's European patent application EP-A-2 471 373.

From GB 2 165 438 an apparatus is known for the aligning of boiled prawns withdrawn from an unordered stock comprising an oscillatory stock container and a conveyor chute. For the purpose of producing a continuous stream of prawns which do not obstruct each other, there is arranged between an outlet opening of the oscillatory stock container and an aligning zone of the conveyor chute a conveying disk, which is driven to rotate about a horizontal axis and which has suction openings distributed around its circumference to lift individual prawns out of a prawn stream induced in the container and to pass them on at a spacing from each other to the conveyor chute. Picking up individual prawns with the suction openings of the conveying disk is relatively unreliable and the apparatus itself requires careful dimensioning with little tolerances to be effective.

In the processing line of EP-A-2 471 373 the shrimps are poured in a hopper from which the shrimps are falling on vibrating plates at the end of which the shrimps are falling separately from each other on a conveyor belt that moves the shrimps first past an imaging device for monitoring the positional orientation of the shrimps on the conveyor belt, and then past a robot arm to pick up and reposition any shrimp of which the positional orientation needs to be corrected. Another option which is reflected in the preamble may be not to reposition the wrongly oriented shrimps but to remove them from the conveyor line and return them for reprocessing to (the feeder at) the entry point of the conveyor line.

The applicant has experienced that there is room for improvement in positioning the shrimps separate from each other on the conveyor line. It is therefore an object of the invention to provide improved means for feeding the shrimps to the conveyor line and to reduce in accordance therewith the operational intensity of the apparatus for removing and/or repositioning the shrimps on the conveyor line so that more shrimps can pass these means in a single pass and move forward to the peeling apparatus where the shrimps are peeled.

According to the invention the processing line and the method of supplying shrimps in a processing line is provided with the features of one or more of the appended claims.

In a first aspect the objects of the invention are achieved by arranging that the feeder is a centrifugal vibrating feeder that is provided with a cone shaped inner periphery with dividers, preferably spiralling rims, that define a lane or lanes through which the shrimps move due to the vibration of the feeder to ensure that the shrimps are sequentially supplied one by one to the peeling apparatus. The particular construction according to the invention avoids the complicated and relatively unreliable construction known from GB 2 165 438. In the invention it is simply the centrifugal vibrating feeder itself without ancillary equipment that enables to supply the shrimps one by one to the conveyor line by providing the feeder with a bulk supply of shrimps and separating the individual shrimps from the bulk supply of shrimps at a predefined distance from each other and subsequently transporting the individual shrimps thus separated from each other individually to the conveyor line. By the vibratory movement of the centrifugal vibrating feeder construed according to the invention the shrimps are caused to move upwards in the lanes between the dividers of the feeder, which favourably assists in separating neighbouring shrimps at a predefined distance from each other, particularly by arranging that the centrifugal vibrating feeder is during use operated at a preselected vibrating frequency which is suited to cause that the shrimps are separated from each other. Practice has shown that the vibrating frequency can be selected at a value that depends on the amplitude of the vibration, on the steepness of the inner periphery, on the roughness of the inner periphery of the cone shaped feeder, in particular the roughness of the lanes, on the humidity and stickiness of the shrimps, and on their temperature. It is understood that this is a non-exhaustive enumeration and that other factors may impact the operational efficiency of the processing line. Most appropriately therefore is to provide the centrifugal vibrating feeder with a motor drive with a selectable frequency and amplitude to enable the user to select these parameters at a value that best suits the situation at hand. In practice the required experimentation to make the proper selection of frequency and amplitude can then be carried out within a limited time which normally is not more than a quarter of an hour.

The separation of the shrimps at a predefined distance from each other can be further supported by arranging that adjacent dividers, particularly the adjacent rims, have a distance with respect to each other that at least equals the size of one shrimp.

The invention will hereinafter be further elucidated with reference to the drawing of an exemplary embodiment of an apparatus according to the invention that is not limiting as to the appended claims.

In the drawing:
- figure 1 shows a schematic representation of a processing line for shrimps according to the invention;
- figure 2 shows an isometric view of the feeder applied in a preferred embodiment of the processing line of the invention; and
- figure 3 shows a top view of the feeder shown in figure 2.

Whenever in the figures the same reference numerals are applied, these numerals refer to the same parts.

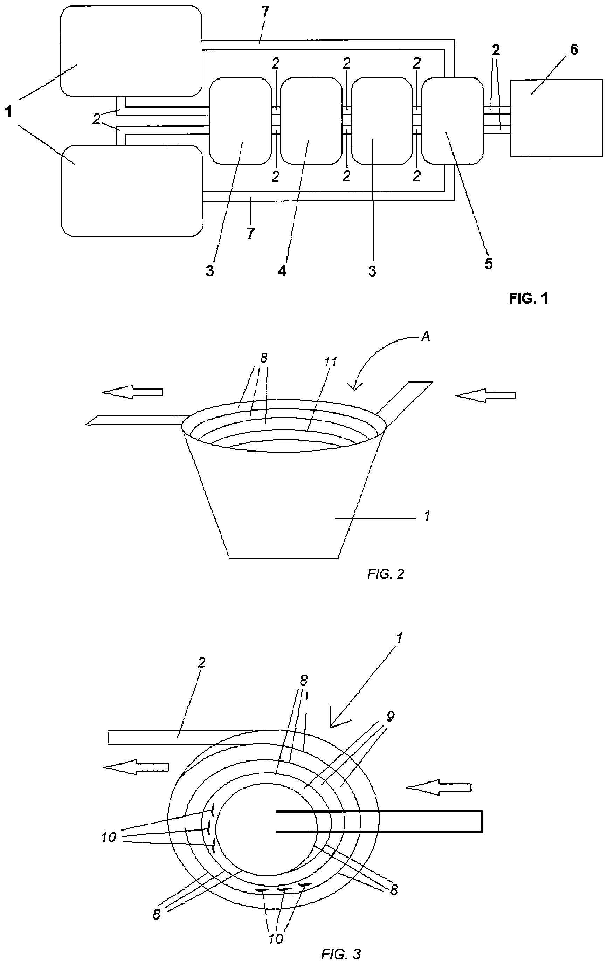

With reference first to figure 1 a processing line for peeling shrimps is depicted, sequentially comprising feeders 1, a conveyor line 2, a detector 3 for detecting the positional orientation of the shrimps on the conveyor line 2, and an apparatus to reposition 4 and/or remove 5 the shrimps on the conveyor line 2, and a peeling apparatus 6 for peeling the shrimps. The apparatus 4, 5 may be actuated depending on the result of the detected positional orientation of the shrimps. It is noted that the figures show two feeders 1, but the number of feeders is not essential so that there may also be only a single feeder or more than two feeders. Further it is noted that it is also possible to either apply an apparatus 4 to reposition the shrimps on the conveyor line 2, or an apparatus 5 to remove the shrimps from the conveyor line 2, or to apply both apparatus 4 and apparatus 5 for repositioning and for removing the shrimps respectively. In case said removal apparatus 5 for removal of the shrimps is applied, the figure depicts that in that case also a return line 7 can be applied to return the removed shrimps to the feeder 1 at the entry point of the conveyor line 2. A suitable repositioning apparatus may be a robot or another dedicated manipulation means or apparatus. A suitable removal apparatus may for instance be a blower, a gripper, a pusher or another suitable means or apparatus. The manner in which this can be implemented is clear for the skilled person and requires no further elucidation.

Figure 2 provides a side view of the feeder employed according to the invention which is embodied as a centrifugal vibrating feeder 1. Arrow A indicates the open top at which the shrimps may be supplied in bulk to the feeder 1. Figure 3 shows a top view of the feeder 1, and from figure 2 and figure 3 seen in combination it is clear that the centrifugal vibrating feeder 1 has a cone shaped inner periphery 11 with dividers that are preferably embodied as spiralling rims 8 and that define lanes 9 through which the shrimps 10 move due to the vibration of the feeder 1. For this purpose the centrifugal vibrating feeder 1 is preferably operated at a vibrating frequency to cause that the shrimps 10 are separated from each other at a predefined distance. It is already remarked that the vibrating frequency can be selected at a value that depends on the amplitude of the vibration, on the roughness of the inner periphery of the cone shaped feeder, in particular the roughness of the lanes, and on the humidity and stickiness of the shrimps, and their temperature and other yet unknown factors. The centrifugal vibrating feeder is therefore preferably provided with a motor drive with a selectable frequency and amplitude to enable the user to select these parameters at a value that best suits the situation at hand. In practice it is possible without any undue burden to perform the required experimentation to make the proper selection of frequency and amplitude. It is further noted that each pair of adjacent dividers 8, which may be embodied as spiralling rims 8', have a distance with respect to each other that at least equals the size of one shrimp 10.

Although the invention has been discussed in the foregoing with reference to an exemplary embodiment of the processing line of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

As a variation of using spiralling rims as the dividers that are provided in the cone shaped inner periphery of the centrifugal vibrating feeder, it is also possible to apply series of protrusions upwardly extending from said peripheries surface.

## Claims

1. Processing line for peeling shrimps (10) sequentially comprising a feeder (1), a conveyor line (2), a detector (3) for detecting the positional orientation of the shrimps (10) on the conveyor line (2), and an apparatus to reposition (4) and/or remove (5) the shrimps (10) from the conveyor line (2) which may be actuated depending on the result of the detected positional orientation of the shrimps (10), and a peeling apparatus (6) for peeling the shrimps (10), **characterized in that** the feeder is a centrifugal vibrating feeder (1) that is provided with a cone shaped inner periphery (11) with dividers (8) that define a lane or lanes (9) through which the shrimps (10) move due to the vibration of the feeder (1) to ensure that the shrimps are sequentially supplied one by one to the peeling apparatus (6).

2. Processing line according to claim 1, **characterized in that** the dividers (8) are spiralling rims (8').

3. Processing line according to claim 1 or 2, **characterized in that** the centrifugal vibrating feeder (1) is selectable to be operated at a vibrating frequency to cause that the shrimps (10) are separated from each other at a predefined distance.

4. Processing line according to claim 2 or 3, **characterized in that** adjacent dividers (8) have a distance with respect to each other that at least equals the size of one shrimp (10).

5. Method of supplying shrimps (10) in a processing line for peeling shrimps, comprising feeding the shrimps to a conveyor line (2) and conveying the shrimps (10) to a peeling apparatus (6) for the shrimps (10), wherein the shrimps are supplied to the conveyor line (2) by providing a bulk supply of shrimps (10) and separating the individual shrimps from the bulk supply of shrimps at a predefined distance from each other and transporting the individual shrimps thus separated from each other to the conveyor line (2), **characterized in that** separating the bulk supply of shrimps (10) into individual shrimps at a distance separate from each other and transporting said individual shrimps in their separated positions is executed by providing the bulk supply of shrimps to an operating centrifugal vibrating feeder (1), and providing said centrifugal vibrating feeder (1) with a cone shaped inner periphery (11) with dividers (8) that define a lane or lanes (9) through which the shrimps (10) move due to the vibration of the feeder (1) to ensure that the shrimps are sequentially supplied one by one to a peeling apparatus (6).

## Patentansprüche

1. Verarbeitungslinie zum Schälen von Garnelen (10), die aufeinanderfolgend eine Zuführeinrichtung (1), ein Förderband (2), einen Detektor (3) zum Detektieren der Lageorientierung der Garnelen (10) auf dem Förderband (2) und eine Vorrichtung zur Umpositionierung (4) und/oder zur Entfernung (5) der Garnelen (10) von dem Förderband (2), die abhängig von dem Ergebnis der detektierten Lageorientierung der Garnelen (10) betätigt werden kann, und eine Schäleinrichtung (6) zum Schälen der Garnelen (10) aufweist,
**dadurch gekennzeichnet, dass**
die Fördereinrichtung eine zentrifugale, vibrierende Zuführeinrichtung (1) ist, die mit einem konusförmigen inneren Umfang (11) mit Teilelementen (8) versehen ist, die eine Bahn oder Bahnen (9) festlegen, durch welche sich die Garnelen (10) aufgrund der Vibration der Zuführeinrichtung (1) bewegen, um sicherzustellen, dass die Garnelen einzeln eine nach der anderen der Schälvorrichtung (6) zugeführt werden.

2. Verarbeitungslinie nach Anspruch 1,
**dadurch gekennzeichnet, dass**
die Teilelemente (8) spiralförmige Ränder bzw. Kanten (8') sind.

3. Verarbeitungslinie nach Anspruch 1 oder 2,
**dadurch gekennzeichnet, dass**
die zentrifugale, vibrierende Zuführeinrichtung (1) auswählbar ist, um bei einer Vibrationsfrequenz betrieben zu werden, die bewirkt, dass die Garnelen (10) mit einem bestimmten Abstand voneinander getrennt werden.

4. Verarbeitungslinie nach Anspruch 2 oder 3,
**dadurch gekennzeichnet, dass**
benachbarte Trennelemente (8) einen Abstand voneinander aufweisen, der zumindest der Größe einer Garnele (10) entspricht.

5. Verfahren zum Zuführen von Garnelen (10) in einer Verarbeitungslinie zum Schälen von Garnelen, welches das Zuführen der Garnelen (10) zu einem Förderband (2) und Fördern der Garnelen (10) zu einer Schälvorrichtung (6) für die Garnelen (10) beinhaltet, wobei die Garnelen durch zur Verfügung stellen einer losen Schüttung von Garnelen (10) und Trennen der einzelnen Garnelen von der losen Schüttung von Garnelen mit einem bestimmten Abstand voneinander und Transportieren der auf diese Weise voneinander getrennten Garnelen zu dem Förderband (2) zu dem Förderband (2) gefördert werden,
**dadurch gekennzeichnet, dass**
das Trennen der losen Schüttung von Garnelen (10) in einzelne Garnelen mit einem Abstand voneinander und Transportieren der einzelnen Garnelen in ihre voneinander getrennte Positionen dadurch durchgeführt wird, dass die lose Schüttung von Garnelen einer betriebsfähigen, zentrifugalen, vibrierenden Zuführeinrichtung (1) zur Verfügung gestellt wird, und dass die zentrifugale, vibrierende Zuführeinrichtung (1) mit einem konusförmigen inneren Umfang (11) mit Trennelementen (8) versehen wird, welche eine Bahn oder Bahnen (9) festlegen, durch welche sich die Garnelen (10) aufgrund der Vibration der Zuführeinrichtung (1) bewegen, um sicherzustellen, dass die Garnelen einzeln eine nach der anderen einer Schälvorrichtung (6) zugeführt werden.

## Revendications

1. Chaîne de transformation pour décortiquer des crevettes (10) à la chaîne, comprenant un distributeur (1), une ligne transporteuse (2), un détecteur (3) pour détecter l'orientation de position des crevettes (10) sur la ligne transporteuse (2), et un dispositif pour repositionner (4) et/ou retirer (5) les crevettes (10) de la ligne transporteuse (2) qui peut être actionné en fonction du résultat de l'orientation de position des crevettes (10) détectée, et un dispositif de décorticage (6) pour décortiquer les crevettes (10), **caractérisée en ce que** le distributeur est un distributeur centrifuge vibrant (1) qui est pourvu d'une périphérie intérieure en forme de cône (11) avec des diviseurs (8) qui définissent un ou des canaux (9) dans lesquels se déplacent les crevettes (10) en raison de la vibration du distributeur (1) pour assurer que les crevettes sont transmises à la chaîne, une par une, au dispositif de décorticage (6).

2. Chaîne de transformation selon la revendication 1, **caractérisée en ce que** les diviseurs (8) sont des rebords en spirale (8').

3. Chaîne de transformation selon la revendication 1 ou 2, **caractérisée en ce que** le distributeur centrifuge vibrant (1) peut être sélectionné pour être activé à une fréquence de vibration destinée à provoquer la séparation des crevettes (10) les unes des autres à une distance prédéfinie.

4. Chaîne de transformation selon la revendication 2 ou 3, **caractérisée en ce que** les diviseurs adjacents (8) ont une distance les uns par rapport aux autres qui est au moins égale à la taille d'une crevette (10).

5. Procédé de fourniture de crevettes (10) dans une chaîne de transformation pour décortiquer des crevettes, comprenant la fourniture des crevettes à une ligne transporteuse (2) et le transport des crevettes (10) jusqu'à un dispositif de décorticage (6) pour les crevettes (10), dans lequel les crevettes sont fournies à la ligne transporteuse (2) en fournissant une alimentation en crevettes (10) en vrac et en séparant les crevettes individuelles de l'alimentation en crevettes en vrac à une distance prédéfinie les unes des autres et en transportant les crevettes individuelles ainsi séparées les unes des autres jusqu'à la ligne transporteuse (2), **caractérisé en ce que** la séparation de l'alimentation en crevettes (10) en vrac en crevettes individuelles séparées les unes des autres d'une distance et le transport desdites crevettes individuelles dans leurs positions séparées sont réalisés en fournissant l'alimentation en crevettes en vrac à un distributeur centrifuge vibrant (1) en fonctionnement, et en munissant ledit distributeur centrifuge vibrant (1) d'une périphérie intérieure en forme de cône (11) avec des diviseurs (8) qui définissent un ou des canaux (9) dans lesquels se déplacent les crevettes (10) en raison de la vibration du distributeur (1) pour assurer que les crevettes sont transmises à la chaîne, une par une, à un dispositif de décorticage (6).
